# EUROPEAN PATENT APPLICATION

(11) **EP 3 656 541 A1**
(43) Date of publication of application: **27.05.2020**
(21) Application number: 19207662.8
(22) Date of filing: 07.11.2019
(51) Int. Cl.: B29C 64/153, B33Y 10/00, B33Y 80/00, B29C 64/386, B22F 3/105, G01N 1/04

(54) **3D PRINTED IN-PROCESS POWDER CAPSULE FOR PRINTING MATERIAL POWDER CHARACTERIZATION**

(30) Priority: 07.11.2018 US 201816182819
(71) Applicant: Ethicon LLC, Guaynabo 00969 (PR)
(72) Inventor: GATRELL, Bernice A., Warsaw, IN Indiana 46582 (US); NEMIRAJ, Rakshak, Warsaw, IN Indiana 46582 (US); JONES, Alexander D., Warsaw, IN Indiana 46582 (US)
(74) Representative: Carpmaels & Ransford LLP

(57) **Abstract**

A three-dimensionally printed capsule (100) includes a sintered exterior (105) and an unsintered powder (112), both formed from a first powder supply. The sintered exterior (105) defines an interior portion (110) that houses the unsintered powder (112). The sintered extern includes a base (102) and a removable cap (104). The removable cap (104) can transition between a fixed position and a detached position. The interior portion (110) is sealed relative to the external environment in the fixed position, while the interior portion (110) is exposed to the external environment in the detached position. The unsintered powder is protected from the external environment when the removable cap is in the fixed position. The unsintered powder (112) is exposed to the external environment when the removeable cap (104) is in the detached position.

## Description

### BACKGROUND

Three-dimensional (3D) printing is an additive printing process used to make three-dimensional solid objects from a digital model. 3D printing may be used in various processes including but not limited to rapid product prototyping, product manufacturing, mold generation, and mold master generation. 3D printing techniques are considered additive processes because they involve the application of successive layers of material. This is unlike traditional machining processes, which often rely upon the removal of material to create the final object. Various materials may be used in 3D printing. For example, materials such as polymide, alumide, titanium, or thermoplastic polyurethane may be used in 3D printing. Some 3D printing techniques utilize powder as the basic material, then transform the powder into a desired shape or structures to form a product. For example, laser sintering involves applying successive thin layers of powder, one layer on top of the next. Between application of each layer of powder, a laser travels over desired portions of the current powder layer and sinters targeted powder together, eventually forming the desired shape or structure. Once complete, the final product may be removed from the unsintered powder.

For various objects manufactured via powder-based 3D printing, it may be desirable to analyze a sample of powder used as the basic material in 3D printing. For instance, certain objects and/or products made from 3D printing may require a specific powder specification such that the objects and/or products have specific properties. To confirm the specific powder specifications, chemical properties and particle qualities (such as shape and size distribution) may need to be tested and confirmed.

While a variety of concepts have been made and used in the context of additive manufacturing, it is believed that no one prior to the inventor(s) has made or used the invention described in the appended claims.

### BRIEF DESCRIPTION OF THE DRAWINGS

While the specification concludes with claims which particularly point out and distinctly claim this technology, it is believed this technology will be better understood from the following description of certain examples taken in conjunction with the accompanying drawings, in which like reference numerals identify the same elements and in which:
FIG. 1 depicts a perspective view of an exemplary powder capsule;
FIG. 2 depicts an perspective view of a disassembled form of the powder capsule of FIG. 1;
FIG. 3 depicts a cross-sectional view of the powder capsule of FIG. 1, taken along line 3-3 of FIG. 1;
FIG. 4A depicts a side cross-sectional view of a 3D printer manufacturing a portion of a sintered exterior of the powder capsule of FIG. 1;
FIG. 4B depicts a side cross-sectional view of the 3D printer of FIG. 4A manufacturing another portion of the sintered exterior of the powder capsule of FIG. 1;
FIG. 4C depicts a side cross-sectional view of the 3D printer of FIG. 4A traveling across a top layer of unsintered powder of the powder capsule of FIG. 1;
FIG. 4D depicts a side cross-sectional view of the 3D printer of FIG. 4A manufacturing another portion of the sintered exterior of the powder capsule of FIG. 1;
FIG. 4E depicts a side cross-sectional view of the 3D printer of FIG. 4A manufacturing another portion of the sintered exterior of the powder capsule of FIG. 1;
FIG. 4F depicts a side cross-sectional view of the 3D printer of FIG. 4A encapsulating the unsintered powder within the confines of the sintered exterior of the powder capsule of FIG. 1;
FIG. 5A depicts a perspective view of the powder capsule of FIG. 1, where the base is fixed to a table vise clamp and the cap is secured with a gripping tool;
FIG. 5B depicts a perspective view of the powder capsule of FIG.1, where the base is fixed to the table vise clamp of FIG. 5A and the cap is removed with the gripping tool of FIG. 5A;
FIG. 5C depicts a perspective view of the powder capsule of FIG. 1, where the base is fixed to the table vise clamp of FIG. 5A and a storage vial is inserted over a neck down opening of the powder capsule;
FIG. 5D depicts a perspective view of the powder capsule of FIG. 1 flipped upside down while the storage vial of FIG. 5C is inserted over the neck down opening of the powder capsule, where unsintered powder is transferring from the powder capsule to the storage vial; and
FIG. 5E depicts a front elevational view of the storage vial of FIG. 5C storing the unsintered powder of the powder capsule, with a cap on the top of the storage vial.

The drawings are not intended to be limiting in any way, and it is contemplated that various embodiments of the technology may be carried out in a variety of other ways, including those not necessarily depicted in the drawings. The accompanying drawings incorporated in and forming a part of the specification illustrate several aspects of the present technology, and together with the description serve to explain the principles of the technology; it being understood, however, that this technology is not limited to the precise arrangements shown.

### DETAILED DESCRIPTION

The following description of certain examples of the technology should not be used to limit its scope. Other examples, features, aspects, embodiments, and advantages of the technology will become apparent to those skilled in the art from the following description, which is by way of illustration, one of the best modes contemplated for carrying out the technology. As will be realized, the technology described herein is capable of other different and obvious aspects, all without departing from the technology. Accordingly, the drawings and descriptions should be regarded as illustrative in nature and not restrictive.

### I. Exemplary Printed In-Process Powder Capsule

As mentioned above, various materials in powder form may be used in 3D printing techniques to create objects and/or products. As also mentioned above, some objects and/or products may require specific powder specifications to help ensure 3D printed objects have specific material properties. Various non-limiting example of objects and/or products that may require specific powder specifications that could be potentially created using 3D printed techniques include surgical instruments, surgical tools, or medical implants.

To confirm whether a 3D printed object/product was printed using a powder meeting a specific powder specification, chemical properties and particle qualities (such as particle shape and particle size distribution) may need to be tested and confirmed. Therefore, it may be desirable to test samples of powder that were used to create particular objects requiring specific material properties. However, obtained powder samples may be negatively affected by various external factors. For instance, when transferring samples of powder for testing (or any other situation where the powder samples are exposed to different elements compared to the actual 3D printed powder), the quality of the powder may be compromised through oxidation, exposure to moisture, various handling errors, or exposure to other contaminants during the transfer process.

Negatively affected powder samples may have different specifications compared to the specifications of the actual powder used to 3D print the objects requiring specific powder specifications. This discrepancy in powder specifications may lead one having ordinary skill in the art to falsely conclude the actual powder used to 3D print objects have a first range of characteristics, when in fact, the actual 3D printed powder does not.

Therefore, it may be desirable to have a process of obtaining samples of unsintered powder that was used during the 3D printing of particular objects that may require specific properties. Further, it may be desirable to have a process to help ensure that the tested powder is as similar as possible to the actual powder used in 3D printing objects requiring specific powder specifications, even if the testing powder is being stored for prolonged periods of time. In order to help ensure consistent quality between powder samples and actual powder used to 3D print objects, it may be desirable to seal and encapsulate some of the unsintered powder during the printing process of the 3D printed objects, thereby providing a sample of the actual powder that was used during printing of a particular object. Further, it may be desirable to seal and encapsulate the unsintered powder through the same 3D printing process that is used to create the 3D printed objects, as this may allow the testing powder to be exposed to the same external factors as the actual powder used to 3D print objects.

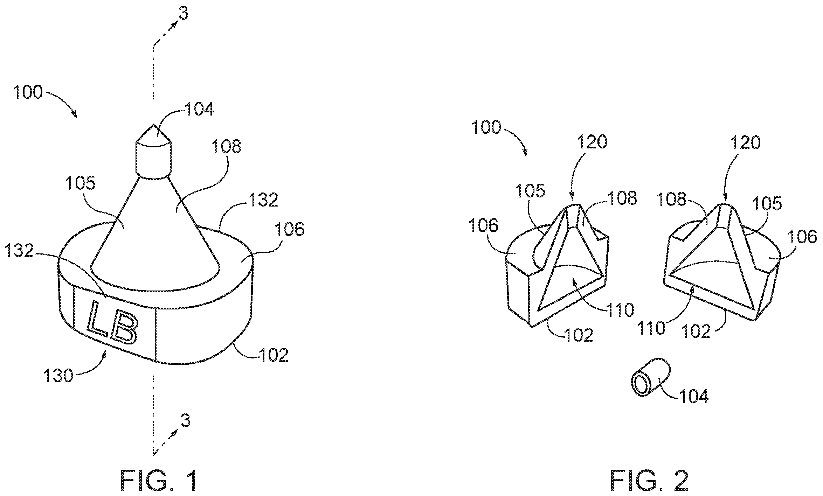

FIG. 1 shows an exemplary powder capsule (100) that may be created during the 3D printing of various objects. Powder capsule (100) may be 3D printed at the same time, and on the same printer base (or "build plate"), as the objects requiring specific powder specifications. Therefore, the powder used to create powder capsule (100) may come from the same powder supply as the powder used to create the objects requiring specific powder specifications; and may thereby accurately serve as a sample of the actual powder that was used to create the 3D printed objects. In some instances, a plurality of objects are 3D printed on the same build plate. In such instances, multiple powder capsules (100) may be 3D printed at the same time, along various locations on the same build plate, as the objects requiring specific powder specifications.

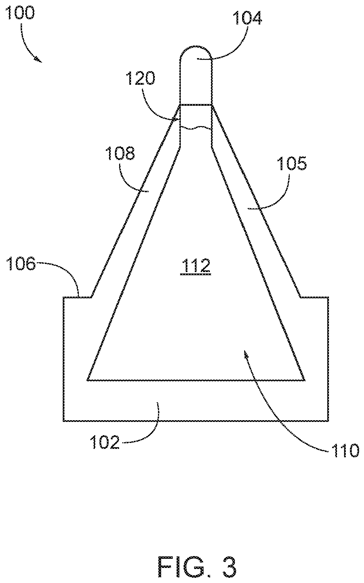

As shown in FIG. 3, powder capsule (100) includes a sintered exterior (105) defining a sealed interior (110) housing unsintered powder (112). When powder capsule (100) is completed in the 3D printing process, unsintered powder (112) is sealed and encapsulated from the external environment by sintered exterior (105). Unsintered powder (112) housed within interior (110) of capsule (100) may be used to provide testing samples to confirm whether objects that were printed using the same powder (112) at the same time powder capsule (100) was printed have specific powder specifications. Sintered exterior (105) may thus act as the transportation vessel of unsintered powder (112) before testing is initiated. Additionally, sintered exterior (105) may seal off unsintered powder (112) from outside influences, such as moisture and atmosphere.

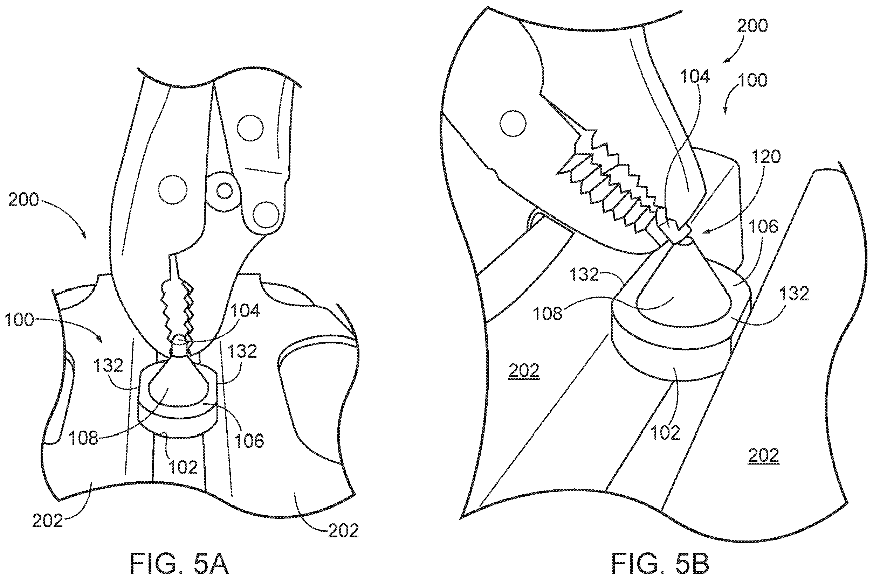

Sintered exterior (105) extends from a base (102) all the way to a cap (104). The exterior of base (102) includes a pair of flat surfaces (132) and an upwardly presented shoulder (106). A frusto-conical portion (108) extends between upwardly presented shoulder (106) of base (102) and cap (104). As best seen in FIG. 3, interior (110) includes a neck down opening (120) directly adjacent to cap (104). As will be described in greater detail below, cap (104) is attached to frusto-conical portion (108) via a relatively thin-walled or otherwise weak connection such that cap (104) may selectively snap off of frusto-conical portion (108) to expose neck down opening (120) to the external environment. As shown in FIG. 2, and as will be described in greater detail below, when unsintered powder (112) is to be tested, cap (104) may be broken off or otherwise removed from the rest of powder capsule (100) such that neck down opening (120) is exposed to the environment, and unsintered powder (112) may be extracted from interior (110) via neck down opening (120). Flat surfaces (132) are configured to be grasped by a pair of clamping members, such as a vise clamp (202) as shown in FIGS. 5A-5C, in order to stabilize powder capsule (100) in preparation of breaking off or otherwise removing cap (104) from the rest of powder capsule (100).

In the current example, base (102) also includes an identifier (130) printed on the exterior surface of base (102). Identifier (130) have any suitable type of information that would be apparent to one having ordinary skill in the art in view of the teachings herein. For example, identifier (130) might include information related to what date capsule (100) was printed, what 3D printer capsule (100) was built on, what portion of build plate was capsule (100) printed, what objects was capsule (100) printed with, how many objects was capsule (100) printed with, how many objects were printed between the current capsule (100) and the next capsule (100), etc. By way of example only, identifier (130) may take the form of an alphanumeric code, some other kind of optical code, or any other suitable form as will be apparent to those skilled in the art in view of the teachings herein.

### II. Exemplary Printing of Powder Capsule

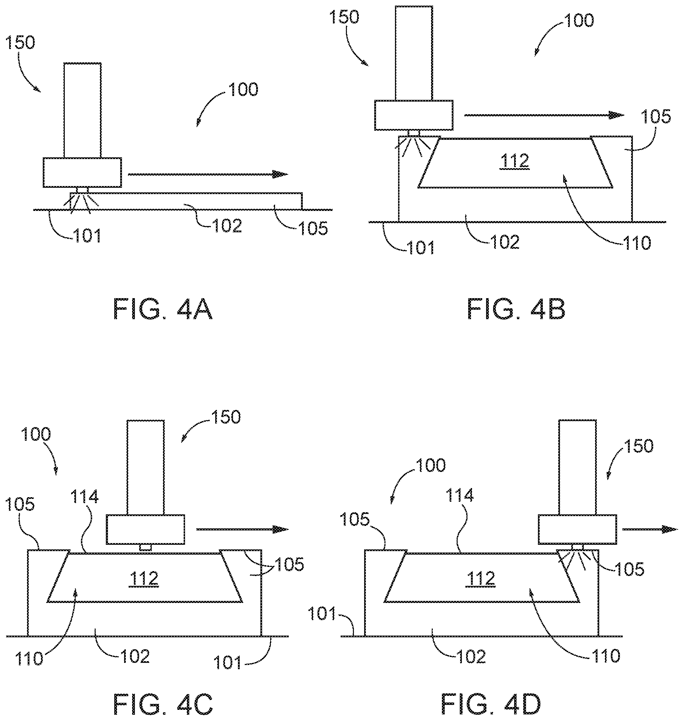

FIGS. 4A-4F show an exemplary manufacturing process of forming 3D printed powder capsule (100) via a 3D printer (150). First, as exemplified in FIG. 4A, 3D printer (150) adds a layer of powder on a base plate (101), then traverses across the added layer of powder while sintering the powder to initially form base (102). 3D printer (150) may apply layers of powder using any suitable technique as would be apparent to one having ordinary skill in the art in view of the teachings herein. As shown in FIG. 4A, while 3D printer (150) is forming the bottom portion of base (102), 3D printer is sintering across the entire cross-sectional area of capsule (100) such that the entire area of the bottom portion of base (102) is sintered, thereby forming the first portion of sintered exterior (105).

3D printer (150) repeats this additive process of applying layers of powder and sintering powder to form base (102) until reaching the portion of capsule (100) where base (102) begins to define sealed interior (110). Then, as exemplified between FIGS. 4B-4D, 3D printer (150) traverses across portions of capsule (100) forming sintered exterior (105) while sintering. Next, as shown in FIG. 4C, 3D printer (150) traverses across portions of capsule (100) defining interior (110) without sintering powder (112) deposited within interior (110), thereby leaving a top layer of unsintered powder (114) within the confines of sintered exterior (105). Next, as shown in FIG. 4D, 3D printer (150) traverses across another portion of capsule (100) forming sintered exterior (105) while sintering. Therefore, unsintered powder (112) remains in powder form, while sintered exterior (105) houses powder (112).

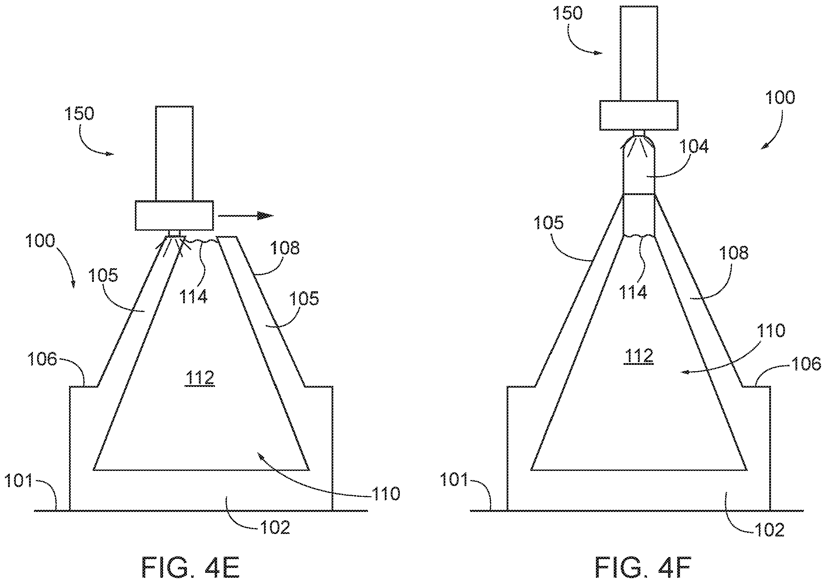

Next, as shown in FIG. 4E, 3D printer (150) may continue to apply layers of powder, sinter portions forming sintered exterior (105), and not sinter top layer of unsintered powder (114) housed within interior (110). Next, as shown in FIG. 4F, 3D printer (150) may deposit and sinter layers of powder to form cap (104). With cap (104) completed, it should be understood that sintered exterior (105) seals and encapsulates unsintered powder (112), thereby protecting powder (112) from the external environment. Once capsule (100) is completed, it should be understood that cap (104), frusto-conical portion (108), and base (102) are of unitary construction. With powder (112) protected by sintered exterior (105), capsule (100) may be transported to a testing area in order to test whether powder (112) conforms with desired powder specifications. Alternatively, capsule (100) may be transported to a library or other storage area such that capsule (100) may be retrieved at a later date in the event that it is desired to test powder (112). For instance, if an instrument, tool, implant, or other device that was made in a 3D printing process from a particular batch of powder (112) fails, a capsule (100) containing a powder (112) sample from that same batch of powder (112) may be retrieved from the library or other storage area and tested to determine whether the formulation of the powder (112) led to the failure of the instrument, tool, implant, or other device.

It should be understood that while in the current example, 3D printer (150) adds an entire layer of powder on top of base plate (101), then traverses above and sinters desired portions of each layer, this is entirely optional. 3D printer (150) may add powder on top of base plate (101) and then sinter desired powder using any suitable technique as would be apparent to one having ordinary skill in art in view of the teachings herein. As one example, 3D printer (150) may add layers of powder on top of base plate (101), then sinter desired sections of powder to print an individual powder capsule (100) between printing desired objects. As another example, 3D printer (150) may add layers of powder on top of base plate (101), then sinter desired sections of powder to print powder capsule (100) and desired objects simultaneously. Of course, 3D printer (150) may apply powder and on top of base plate (101) and sinter or not sinter powder using any suitable method that would be apparent to one having ordinary skill in the art in view of the teachings herein.

### III. Exemplary Extraction of Powder from Powder Capsule

Once capsule (100) arrives at the testing center, is may be desirable to extract powder (112) in order to test the quality of powder (112) in accordance with the description herein. FIGS. 5A-5E show an exemplary extraction of unsintered powder (112). First, the operator may affix capsule (100) to a clamping member (202), such as a vise clamp, in order to mechanically fasten capsule (100). The operator may align opposed flat surfaces (132) into contact with clamping members (202) and actuate clamping member (202) into contact with flat surfaces (132) until capsule (100) is mechanically fastened. While in the current example, clamping member (202) includes a vise clamp, any suitable clamping member (202) may be utilized as would be apparent to one having ordinary skill in the art in view of the teachings herein.

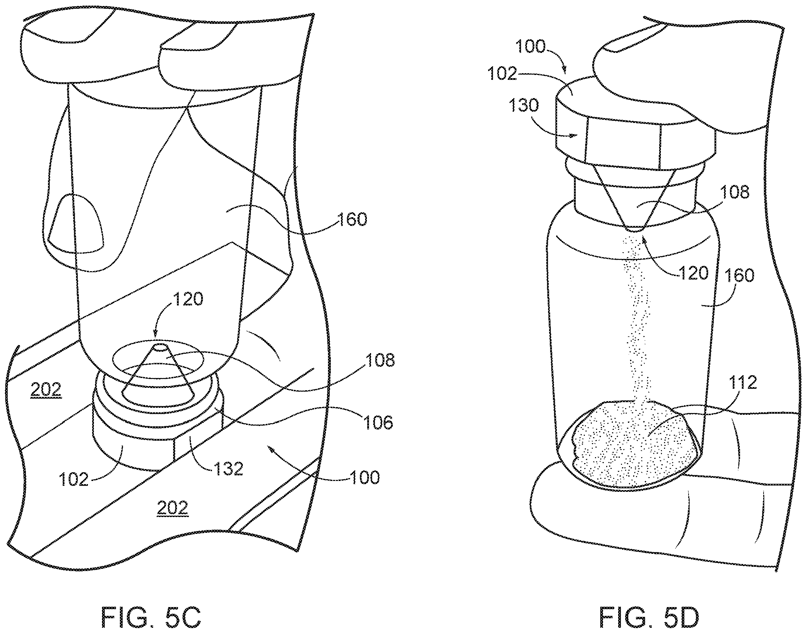

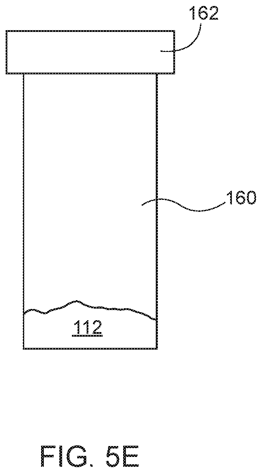

Next, as shown in FIG. 5B, with capsule (100) fastened, the operator may remove cap (104) from the rest of capsule (100) via gripping device (200). As mentioned above, cap (104) is attached to frusto-conical portion (108) via a relatively thin-walled or otherwise weak connection. Therefore, the operator may grasp cap (104) with gripping device (200) and break off cap (104) from frusto-conical portion (108) at the thin-walled or otherwise weak connection. It should be understood that when cap (104) is removed from capsule (100), powder (112) is exposed to the external environment via neck down opening (120). Next, as shown in FIG. 5C, the operator may place a storage vial (160) over capsule (100) such that frusto-conical portion (108), and neck down opening (120) are located within the interior of storage vial (160), and an opened rim of storage vial (160) abuts against shoulder (106) of base (102). Next, as shown in FIG. 5D, the operator may unfasten capsule (100) from clamping members (202) and flip capsule (100) and vial (160) around such that neck down opening (120) remains within the confines of vial (160). Unsintered powder (112) may pour from capsule (100) via neck down opening (120) and transfer into vial (160) under the influence of gravity. Capsule (100) may also include external threading configured to mesh with complementary threading on vile (160) such that capsule (100) may screw into engagement with vile (160). When capsule (100) is emptied of unsintered powder (112), the operator may remove capsule (100) from vial (160). At this point, the operator may begin testing unsintered powder (112), or as shown in FIG. 5E, place a cap (162) on vial (160) to further protect powder (112) from the external environment.

### IV. Exemplary Combinations

The following examples relate to various non-exhaustive ways in which the teachings herein may be combined or applied. It should be understood that the following examples are not intended to restrict the coverage of any claims that may be presented at any time in this application or in subsequent filings of this application. No disclaimer is intended. The following examples are being provided for nothing more than merely illustrative purposes. It is contemplated that the various teachings herein may be arranged and applied in numerous other ways. It is also contemplated that some variations may omit certain features referred to in the below examples. Therefore, none of the aspects or features referred to below should be deemed critical unless otherwise explicitly indicated as such at a later date by the inventors or by a successor in interest to the inventors. If any claims are presented in this application or in subsequent filings related to this application that include additional features beyond those referred to below, those additional features shall not be presumed to have been added for any reason relating to patentability.

### Example 1

A three-dimensionally printed capsule, comprising: (a) a sintered exterior formed from a first powder supply, wherein the sintered exterior defines an interior portion, wherein the sintered exterior comprises: (i) a base, and (ii) a removable cap configured to transition from a fixed position to a detached position, wherein the removable cap is fixed relative to the base in the fixed position, wherein the interior portion is sealed relative to an external environment when the removable cap is in the fixed position, wherein the interior portion is exposed the external environment when the removable cap is in the detached position; and (b) an unsintered powder formed from the first powder supply, wherein the unsintered powder is housed within the sealed interior portion of the sintered exterior, wherein the unsintered powder is protected from the external environment when the removable cap is in the fixed position, wherein the unsintered powder is exposed to the external environment when the removable cap is in the detached position.

### Example 2

The three-dimensionally printed capsule of Example 1, wherein the base comprises a pair of flat surfaces.

### Example 3

The three-dimensionally printed capsule of any one or more of Examples 1 through 2, wherein the sintered exterior comprises an identification area.

### Example 4

The three-dimensionally printed capsule of Example 3, wherein the identification area is located on the base.

### Example 5

The three-dimensionally printed capsule of any one or more of Examples 1 through 4, wherein the sintered exterior further comprises a connecting portion extending between the base and the cap.

### Example 6

The three-dimensionally printed capsule of Example 5, wherein the connecting portion is a frusto-conical shape.

### Example 7

The three-dimensionally printed capsule of any one or more of Examples 1 through 6, wherein the base comprises an upwardly presented shoulder facing toward the cap.

### Example 8

The three-dimensionally printed capsule of any one or more of Examples 1 through 7, wherein the interior portion defined by the sintered exterior comprises a neck downed opening adjacent to the cap in the fixed position.

### Example 9

The three-dimensionally printed capsule of any one or more of Examples 1 through 8, wherein the unsintered powder and the sintered exterior are made from the same material.

### Example 10

A method of three-dimensionally printing a powder capsule from a first powder supply, wherein the powder capsule comprises (a) a sintered exterior formed of unitary construction, wherein the sintered exterior defines an interior portion; and (b) an unsintered powder housed within the interior portion of the sintered exterior such that the unsintered powder is fully encapsulated by the sintered exterior; the method comprising: (a) depositing a first layer of powder; (b) sintering a first fully contained perimeter of the first layer of powder, as well as an entire interior of the first fully contained perimeter of the first layer of powder; (c) depositing a second layer of powder; (d) sintering a second fully contained perimeter of the second layer of powder without sintering at least a portion of the powder located within the second fully contained perimeter; (e) depositing a third layer of powder; and (f) sintering a third fully contained perimeter of the third layer of powder, as well as an entire interior of the third fully contained perimeter of the third layer of powder.

### Example 11

The method of Example 10, wherein sintering the first fully contained perimeter of the first layer of powder further comprises sintering the sintered exterior portion, wherein sintering the second fully contained perimeter of the second layer of powder further comprises sintering the sintered exterior portion, wherein sintering the third fully contained perimeter of the third layer of powder further comprises sintering the sintered exterior portion.

### Example 12

The method of any one or more of Examples 10 through 11, wherein sintering the second fully contained perimeter further comprises forming a shoulder.

### Example 13

The method of any one or more of Examples 10 through 12, wherein sintering the third fully contained perimeter comprising forming a removable cap.

### Example 14

The method of Example 13, wherein forming the removable cap further comprises defining a portion of the interior portion.

### Example 15

Th method of any one or more of Examples 10 through 14, wherein sintering the first layer of powder, the second layer of powder, and the third layer of powder further comprises a laser sintering process.

### Example 16

The method of any one or more of Examples 1 through 15, further comprising three-dimensionally printing an identifying element on a surface of the sintered exterior.

### Example 17

The method of any one or more of Examples 1 through 16, further comprising three-dimensionally printing a separate object other than the powder capsule formed from the first powder supply.

### Example 18

A method of three-dimensionally printing a capsule from a first powder supply, the method comprising: (a) depositing a first amount of powder from the first powder supply; (b) sintering the first amount of powder to form a sintered base; (c) depositing a second amount of powder from the first powder supply and a third amount of powder from the first powder supply on top of sintered base; (d) sintering the second amount of powder to form a portion of a sintered side wall connected with the sintered base; (e) depositing a fourth amount of powder from the first powder supply on top of the sintered side wall and the third amount of powder; and (f) sintering the fourth amount of powder to form a portion of a sintered top, wherein the sintered base, the sintered side wall, and the sintered top fully contain the third amount of powder.

### Example 19

The method of Example 18, further comprising sintering a cap on top of the top wall.

### Example 20

The method of any one or more of Examples 18 through 19, wherein the sintered side wall is a frusto-conical shape.

### V. Miscellaneous

It should also be understood that any one or more of the teachings, expressions, embodiments, examples, etc. described herein may be combined with any one or more of the other teachings, expressions, embodiments, examples, etc. that are described herein. The above-described teachings, expressions, embodiments, examples, etc. should therefore not be viewed in isolation relative to each other. Various suitable ways in which the teachings herein may be combined will be readily apparent to those of ordinary skill in the art in view of the teachings herein. Such modifications and variations are intended to be included within the scope of the claims.

It should be appreciated that any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as explicitly set forth herein supersedes any conflicting material incorporated herein by reference. Any material, or portion thereof, that is said to be incorporated by reference herein, but which conflicts with existing definitions, statements, or other disclosure material set forth herein will only be incorporated to the extent that no conflict arises between that incorporated material and the existing disclosure material.

Having shown and described various embodiments of the present invention, further adaptations of the methods and systems described herein may be accomplished by appropriate modifications by one of ordinary skill in the art without departing from the scope of the present invention. Several of such potential modifications have been mentioned, and others will be apparent to those skilled in the art. For instance, the examples, embodiments, geometries, materials, dimensions, ratios, steps, and the like discussed above are illustrative and are not required. Accordingly, the scope of the present invention should be considered in terms of the following claims and is understood not to be limited to the details of structure and operation shown and described in the specification and drawings.

## Claims

1. A three-dimensionally printed capsule, comprising:
(a) a sintered exterior formed from a first powder supply, wherein the sintered exterior defines an interior portion, wherein the sintered exterior comprises:
(i) a base, and
(ii) a removable cap configured to transition from a fixed position to a detached position, wherein the removable cap is fixed relative to the base in the fixed position, wherein the interior portion is sealed relative to an external environment when the removable cap is in the fixed position, wherein the interior portion is exposed the external environment when the removable cap is in the detached position; and
(b) an unsintered powder formed from the first powder supply, wherein the unsintered powder is housed within the sealed interior portion of the sintered exterior, wherein the unsintered powder is protected from the external environment when the removable cap is in the fixed position, wherein the unsintered powder is exposed to the external environment when the removable cap is in the detached position.

2. The three-dimensionally printed capsule of claim 1, wherein the base comprises a pair of flat surfaces.

3. The three-dimensionally printed capsule of claim 1, wherein the sintered exterior comprises an identification area.

4. The three-dimensionally printed capsule of claim 3, wherein the identification area is located on the base.

5. The three-dimensionally printed capsule of claim 1, wherein the sintered exterior further comprises a connecting portion extending between the base and the cap.

6. The three-dimensionally printed capsule of claim 5, wherein the connecting portion is a frusto-conical shape.

7. The three-dimensionally printed capsule of claim 1, wherein the base comprises an upwardly presented shoulder facing toward the cap.

8. The three-dimensionally printed capsule of claim 1, wherein the interior portion defined by the sintered exterior comprises a neck downed opening adjacent to the cap in the fixed position.

9. The three-dimensionally printed capsule of claim 1, wherein the unsintered powder and the sintered exterior are made from the same material.

10. A method of three-dimensionally printing a powder capsule from a first powder supply, wherein the powder capsule comprises (a) a sintered exterior formed of unitary construction, wherein the sintered exterior defines an interior portion; and (b) an unsintered powder housed within the interior portion of the sintered exterior such that the unsintered powder is fully encapsulated by the sintered exterior; the method comprising:
(a) depositing a first layer of powder;
(b) sintering a first fully contained perimeter of the first layer of powder, as well as an entire interior of the first fully contained perimeter of the first layer of powder;
(c) depositing a second layer of powder;
(d) sintering a second fully contained perimeter of the second layer of powder without sintering at least a portion of the powder located within the second fully contained perimeter;
(e) depositing a third layer of powder; and
(f) sintering a third fully contained perimeter of the third layer of powder, as well as an entire interior of the third fully contained perimeter of the third layer of powder.

11. The method of claim 10, wherein sintering the first fully contained perimeter of the first layer of powder further comprises sintering the sintered exterior portion, wherein sintering the second fully contained perimeter of the second layer of powder further comprises sintering the sintered exterior portion, wherein sintering the third fully contained perimeter of the third layer of powder further comprises sintering the sintered exterior portion.

12. The method of claim 10, wherein sintering the second fully contained perimeter further comprises forming a shoulder.

13. The method of claim 10, wherein sintering the third fully contained perimeter comprising forming a removable cap.

14. The method of claim 13, wherein forming the removable cap further comprises defining a portion of the interior portion.

15. The method of claim 10, wherein sintering the first layer of powder, the second layer of powder, and the third layer of powder further comprises a laser sintering process.

16. The method of claim 10, further comprising three-dimensionally printing an identifying element on a surface of the sintered exterior.

17. The method of claim 10, further comprising three-dimensionally printing a separate object other than the powder capsule formed from the first powder supply.

18. A method of three-dimensionally printing a capsule from a first powder supply, the method comprising:
(a) depositing a first amount of powder from the first powder supply;
(b) sintering the first amount of powder to form a sintered base;
(c) depositing a second amount of powder from the first powder supply and a third amount of powder from the first powder supply on top of sintered base;
(d) sintering the second amount of powder to form a portion of a sintered side wall connected with the sintered base;
(e) depositing a fourth amount of powder from the first powder supply on top of the sintered side wall and the third amount of powder; and
(f) sintering the fourth amount of powder to form a portion of a sintered top, wherein the sintered base, the sintered side wall, and the sintered top fully contain the third amount of powder.

19. The method of claim 18, further comprising sintering a cap on top of the top wall.

20. The method of claim 18, wherein the sintered side wall is a frusto-conical shape.
